# EUROPÄISCHE PATENTSCHRIFT

(11) **EP 4 104 975 B1**
(45) Veröffentlichungstag und Bekanntmachung des Hinweises auf die Patenterteilung: **23.09.2026**
(21) Anmeldenummer: 22176359.2
(22) Anmeldetag: 31.05.2022
(51) Int. Cl.: B25G 1/10, B62K 23/04, B62K 21/26

(54) **GRIFFPAAR**
HANDLE PAIR
PAIRE DE POIGNÉES

(30) Priorität: 15.06.2021 DE 202021103203 U
(43) Veröffentlichungstag der Anmeldung: 21.12.2022
(73) Patentinhaber: Ergon International GmbH, 56070 Koblenz (DE)
(72) Erfinder: Eßfeld, Matthias, 56154 Boppard (DE); Kuntzer, Clarissa, 56281 Emmelshausen (DE)
(74) Vertreter: dompatent

(56) Entgegenhaltungen:
- WO-A2-2007/033382
- DE-C- 688 541
- GB-A- 2 493 147
- US-A1- 2020 156 729

## Beschreibung

Die Erfindung betrifft ein Griffpaar für ein motorisch angetriebenes ein- oder mehrspuriges Fahrzeug. Hierbei handelt es sich insbesondere um ein E-Bike oder ein Motorrad, wobei das Griffpaar insbesondere für Enduro-Motorräder und Cross-Motorräder geeignet ist.

Fahrzeuge mit motorischem Antrieb weisen einen Elektromotor oder einen Verbrennungsmotor auf. Zur Drehzahlregelung, insbesondere zur Beschleunigung ist es insbesondere bei Motorrädern bekannt, dass ein Griff, der üblicherweise als Gasgriff bezeichnet wird, drehbar am Lenker angeordnet ist. Dieser üblicherweise auf der rechten Seite angeordnete Gasgriff kann bei einer mechanischen Ausgestaltung mit einem mechanischen Gaszug verbunden sein. Durch Drehen des Gasgriffs wird der beispielsweise über eine Kulissenführung mit dem Gasgriff verbundene Gaszug bewegt. Hierdurch wird je nach Ausführung des Verbrennungsmotors die Drehzahl erhöht. Eine entsprechende Regelung kann auch bei einem elektromotorischen Antrieb erfolgen, so dass durch Drehen des Gasgriffs die Drehzahl geregelt wird.

Übliche bekannte Griffe, die insbesondere bei Motorrädern verwendet werden, sind aus einem relativ weichen Kunststoffmaterial hergestellt. Die Grifföffnung weist hierbei einen Innendurchmesser auf, der geringfügig kleiner ist als der Außendurchmesser des Lenkers. Die Griffe werden über die Lenkerenden gestülpt und sind aufgrund der Reibung mit dem Lenker verbunden. Auf der rechten Seite erfolgt die Verbindung nicht unmittelbar mit dem Lenker, sondern mit einer auf dem Lenker vorgesehenen drehbaren Hülse. Ebenso kann die drehbare Hülse auch unmittelbar in den Griff integriert sein. Die Öffnung des Griffs weist wiederum einen etwas geringeren Durchmesser als den Außendurchmesser der

Hülse auf, so dass durch Aufschieben oder Überstülpen des rechten Griffs auf die Hülse eine feste Verbindung zur Hülse realisiert ist. Hierdurch kann über den rechten Griff die Hülse auf dem Lenker gedreht und somit am Gaszug gezogen werden. Ebenso ist es möglich, den linken und/oder rechten Griff mit dem Lenker durch verkleben und/oder klemmen oder dergleichen zu verbinden.

DE 688541 beschreibt einen einzelnen Fahrradgriff mit einem Abstützelement für den Handballen. Ein Griffpaar mit unterschiedlichen Griffen ist nicht beschrieben. DE 688 541 C offenbart die Präambel des Anspruchs 1.

US 2020/0156729 beschreibt einen Fahrradgriff, der aus unterschiedlichen Elementen zusammengesetzt ist, sodass es möglich ist, Fahrradgriffe mit unterschiedlichen Konturen auszugestalten. Ein Griffpaar ist nicht beschrieben.

GB 2493147 beschreibt ein Griffpaar mit spiegelsymmetrisch zueinander ausgebildeten Fahrradgriffen.

Aufgabe der Erfindung ist es, ein Griffpaar für ein motorisch angetriebenes ein- oder mehrspuriges Fahrzeug zu schaffen, um die Handhabung des Fahrzeugs zu verbessern.

Die Lösung der Aufgabe erfolgt durch ein Griffpaar mit den Merkmalen des Anspruchs 1.

Das erfindungsgemäße Griffpaar für ein motorisch angetriebenes ein- oder mehrspuriges Fahrzeug weist einen linken und einen rechten Griff auf. Hierbei handelt es sich jeweils um die Montage der Griffe auf dem Lenker in Fahrtrichtung. Der linke Griff ist an dem Lenker drehfest fixierbar. Der rechte Griff ist an dem Lenker drehbar angeordnet. Vorzugsweise kann der rechte Griff auf einer drehbaren Hülse, die mit einem Gaszug oder dergleichen verbunden ist, angeordnet sein. Erfindungsgemäß weist zumindest der linke Griff ein flügelförmiges Handballenauflageelement auf. Ferner sind erfindungsgemäß die Außenkonturen der beiden Griffe unterschiedlich. So kann der rechte Griff eine zylindrische Außenkontur aufweisen, so dass die beiden Außenkonturen sich dadurch unterscheiden, dass der linke Griff eine flügelförmige Handballenauflage aufweist und der rechte Griff eine derartige Handballenauflage nicht aufweist. Erfindungsgemäß ist es hierbei, dass sich die Außenkonturen derart unterscheiden, dass der rechte Griff eine kleinere Außenkontur als der linke Griff aufweist. Unter einer kleineren Außenkontur wird hierbei eine Außenkontur verstanden, die eine geringere Außenabmessung aufweist. Anders ausgedrückt, ist das Volumen des rechten Griffs kleiner als das Volumen des linken Griffs.

Bei einer besonders bevorzugten Ausführungsform der Erfindung weisen beide Griffe ein flügelförmiges Handballenauflageelement auf. Die Griffe sind somit nicht zylindrisch ausgebildet, sondern weisen einen Ansatz auf. Dieser Ansatz weist in montiertem Zustand in Richtung des Fahrers und dient zum Abstützen des Handballens. Hierdurch kann die Ergonomie deutlich verbessert werden, wobei insbesondere eine Entlastung der Handgelenke erfolgt. Besonders bevorzugt ist es hierbei, dass die beiden Handballenauflageelemente unterschiedliche Auflageflächen aufweisen. So ist es insbesondere bevorzugt, dass sich der Bereich, d.h. die Flächen, auf denen der Handballen aufliegt, in Größe und/oder Form voneinander unterscheiden. Die Auflagefläche ist hierbei insbesondere durch den Bereich des Handballenauflageelements definiert, der bei einem ausschließlich zylindrischen Griff nicht vorhanden wäre, d.h. den zusätzlichen, in Richtung des Benutzers weisenden Ansatz. Hierdurch ist es möglich, den unterschiedlichen Anforderungen an den drehfesten linken und den drehbaren rechten Griff gerecht zu werden.

Besonders bevorzugt ist es, dass die Auflagefläche in Draufsicht eine unterschiedlich große Fläche aufweist. Hierbei handelt es sich um die Fläche, die bei einem horizontal ausgerichteten Handballenauflageelement der Position in vertikaler Richtung entspricht. Die horizontale Ausrichtung erfolgt hierbei vorzugsweise anhand einer Mittenebene des Handballenauflageelements, die sich senkrecht zu der zylindrischen Ausnehmung des Griffs erstreckt. Der rechte Griff ist in seiner unverdrehten Grundstellung horizontal ausgerichtet.

Besonders bevorzugt ist es, dass die Auflagefläche des Handballenauflageelements des linken Griffs größer ist als diejenige des rechten Griffs. Besonders bevorzugt ist die Auflagefläche des linken Griffs mindestens 5% und insbesondere mindestens 5% größer als diejenige des rechten Griffs. Vorzugsweise ist die Auflagefläche des linken Griffs maximal 70% und besonders bevorzugt maximal 20% größer als diejenige des rechten Griffs. Die Auflagefläche des Handballenauflageelements ist hierbei die gesamte Fläche der nach oben weisenden Hälfte des Griffs. Es handelt sich somit um die in Draufsicht sichtbare Fläche. Wenngleich der Handballen ggf. nicht auf dieser gesamten Fläche aufliegt, sondern Teile dieser Fläche häufig nur von Teilen der Finger als Auflagefläche genutzt werden, ist zum Vergleich der Größe der Auflagefläche hier die gesamte obere Hälfte der Griffoberfläche als gesamte Auflagefläche definiert.

In einer weiteren bevorzugten Ausführungsform ist in Draufsicht eine Kontur des Handballenauflageelements unterschiedlich. Insbesondere unterscheidet sich in Draufsicht die Außenkontur des Handballenauflageelements des linken Griffs von derjenigen des rechten Griffs. Besonders bevorzugt ist es hierbei, dass die Kontur des linken Griffs derart ausgebildet ist, dass dessen Handballenauflagefläche weiter in Richtung des Benutzers ragt. Insofern ist es bevorzugt, dass das Merkmal der größeren Auflagefläche mit dem Merkmal der unterschiedlichen Kontur kombiniert ist.

Vorzugsweise sind die Konturen derart ausgebildet, dass sie unterschiedliche Krümmungsradien aufweisen. Wird beispielsweise die Kontur des linken Griffs mit dem rechten Griff verglichen, so müssen in diesem Ausführungsbeispiel die Krümmungsradien der Kontur bei einem gleichen Abstand zur Außenseite des Griffs miteinander verglichen werden. Die Konturen und somit insbesondere die Krümmungsradien können hierbei in unterschiedlichen Abständen gleich oder unterschiedlich ausgebildet sein. Besonders bevorzugt ist es, dass die Krümmungsradien an dem Scheitelpunkt der Konturen der Handballenauflageelemente unterschiedlich sind. Besonders bevorzugt ist es, dass der Krümmungsradius am Scheitelpunkt des linken Griffs größer ist als der Krümmungsradius am Scheitelpunkt des rechten Griffs. Am Scheitelpunkt liegen die Krümmungsradien beim linken Griff vorzugsweise im Bereich von 10 bis 30 mm. Beim rechten Griff liegen die Krümmungsradien am Scheitelpunkt vorzugsweise im Bereich von 30 bis 50 mm.

Bei einer weiteren bevorzugten Ausführungsform beträgt der Abstand einer Spitze der flügelförmigen Handballenauflagefläche zu einer Mittelachse des linken Fahrradgriffs mindestens 15mm und maximal 30mm. Bei dem rechten Griff beträgt dieser Abstand vorzugsweise mindestens 15mm und maximal 20mm. Die Spitze der Auflagefläche ist hierbei der Extrempunkt der Außenkontur der Auflagefläche mit dem größten Abstand zur Griffmittelachse. Die Griffmittelachse ist die Mittellinie einer zylindrisch ausgebildeten Innenhülse des Griffs, sofern eine derartige Hülse vorhanden ist und entspricht der Mittellinie des Lenkers in montiertem Zustand.

In bevorzugter Weiterbildung der Erfindung sind insbesondere beide Griffe derart ausgebildet, dass sie eine Innenhülse aufweisen, die von einem Griffelement umgeben ist. Hierbei ist die Innenhülse vorzugsweise derart ausgebildet, dass sie eine zylindrische Öffnung aufweist. Das Griffelement umgibt die Innenhülse und bildet insbesondere den Ansatz aus, der als Handballenauflageelement dient. Bevorzugt ist es hierbei, dass die Innenhülse aus einem härteren Material als das Griffelement ausgebildet ist. Hierdurch ist es möglich, einerseits eine gute Verbindung mit dem Lenker bzw. der Hülse des Drehgriffs zu realisieren und andererseits ein, ergonomisch vorteilhaftes verhältnismäßig weiches Griffelement zu verwirklichen.

In einer bevorzugten Weiterbildung weist die Innenhülse zumindest des linken Griffs einen flügelförmigen Versteifungsansatz auf. Dieser ragt in das Handballenauflageelement. Hierdurch ist insbesondere bei dem linken größeren Handballenauflageelement gewährleistet, dass dieses eine ausreichende Steifigkeit aufweist und bei Belastung beispielsweise nicht abknickt oder sich ungewollt verformt.

Des Weiteren ist es bevorzugt, dass der linke Griff ein Fixierelement zum drehfesten Befestigen am Lenker aufweist. Hierdurch ist sichergestellt, dass sich der linke Griff aus einer bevorzugten Position, in der das Handballenauflageelement im Wesentlichen horizontal ausgerichtet ist, nicht verdreht. Aufgrund des Vorsehens eines Fixierelements ist dies auch beim Auftreten von größeren Belastungen sichergestellt. Vorzugsweise weist das Fixierelement ein Klemmelement auf. Dieses ist insbesondere entsprechend einer Schelle ausgebildet, die in montiertem Zustand den Lenker umgibt. Insbesondere umgibt das Klemmelement, vorzugsweise zumindest teilweise, die Innenhülse des Griffs. Ein insbesondere schellenartig ausgebildetes Klemmelement fixiert somit die Innenhülse auf dem Lenker. Hierzu kann die Innenhülse in diesem Bereich einen oder mehrere Schlitze aufweisen, die insbesondere in Längsrichtung verlaufen, um ein zuverlässiges klemmendes Fixieren der Innenhülse des linken Griffs auf dem Lenker zu gewährleisten.

Das Fixierelement ist vorzugsweise auf einer Innenseite des Griffs angeordnet. Bei der Innenseite des Griffs handelt es sich im montierten Zustand um diejenige Seite des Griffs, die nach innen in Richtung des Lenkervorbaus weist. Ebenso oder zusätzlich zu einer inneren Fixierung ist es möglich, das Fixierelement an einer Außenseite vorzusehen. Bei dieser Ausführungsform ist es besonders bevorzugt, dass das Fixierelement, insbesondere ein Klemmelement wie eine Schelle des Fixierelements, zumindest teilweise vom Griffelement umgeben ist. Durch eine derartige, zumindest teilweise Abdeckung des Fixierelements durch das Griffelement ist es möglich, ein Fixierelement aus hartem Material einzusetzen, da der Benutzer nicht unmittelbar das Fixierelement umgreift, sondern eine entsprechende Dämpfung durch das Griffelement gewährleistet ist.

Auch der rechte Griff kann ein Fixierelement aufweisen, das vorzugsweise wie vorstehend anhand des linken Griffs beschrieben ausgebildet und angeordnet sein kann. Durch ein derartiges Fixierelement ist es möglich, den rechten Griff auf der drehbaren, am Lenker vorgesehenen Hülse des Gasgriffs zu fixieren.

Der rechte Griff ist in besonders bevorzugter Ausführungsform auf seiner Innenseite mit einem Aufnahmeelement verbunden. Dieses Aufnahmeelement dient zur Verbindung mit einer Gaszughalterung wie einer Kulisse oder unmittelbar zur Verbindung mit dem Gaszug. Hierbei ist es möglich, dass das Aufnahmeelement selbst als Kulisse ausgebildet ist. Besonders bevorzugt ist es, dass das Aufnahmeelement mit der Innenhülse des rechten Griffs verbunden ist. Insbesondere kann das Aufnahmeelement beispielsweise zur Aufnahme unterschiedlicher Gaszughalterungen ausgetauscht werden. Alternativ kann das entsprechende Aufnahmeelement zur Verbindung mit dem Gaszug oder einer Gaszughalterung auch mit der am Lenker vorgesehenen drehbaren Hülse verbunden sein. In montiertem Zustand bildet der rechte Griff in beiden Ausführungsformen mit dem Aufnahmeelement bzw. der Gaszughalterung eine gemeinsam auf dem Lenker drehbare Einheit.

Der rechte Griff, bzw. der Gasgriff weist vorzugsweise einen harten Kern auf, der vorzugsweise als zylindrische Hülse ausgebildet ist. Dieser kann von einem weichen Griffelement umgeben sein. Das mit dem harten Kern insbesondere konstruktiv verbunden ist. Besonders bevorzugt ist es, dass mit dem Kern ein formschlüssiges Aufnahmeelement für eine Griffkulisse verbunden, beispielsweise einstückig ausgebildet ist. Diese bildet ein Verbindungsstück zwischen dem Griffkern und dem Gaszug. Die Aufnahme ist vorzugsweise derart ausgebildet, dass eine Kulisse in unterschiedlichen Positionen angeordnet werden kann. Beispielsweise weist die Aufnahme einen 8-eckigen Querschnitt, eine Verzahnung oder dergleichen auf. Die Gaskulisse selbst kann einerseits unterschiedlich angeordnet und auch unterschiedlich ausgebildet sein, um beispielsweise für zwei- sowie vier-Takt-Motoren geeignet zu sein. Hierdurch können unterschiedliche Hebelverhältnisse für unterschiedliche Drosselklappen, Gaskennlinien und dergleichen realisiert werden. Vorzugsweise ist die Aufnahme für die Gaskulisse und ggf. auch die Gaskulisse selbst Teil des Gasgriffs.

Bei einer bevorzugten Weiterbildung der Erfindung weisen insbesondere beide Griffe an einer Innenseite ein Anlageelement auf. Bevorzugt ist es hierbei, dass das Anlageelement ringförmig ausgebildet ist, wobei das ringförmige Anlageelement den Lenker im montierten Zustand umgibt und sich im Wesentlichen senkrecht zur Längsrichtung des Lenkers erstreckt. Durch dieses Anlageelement ist das Greifen des Griffs in der richtigen Position verbessert, da ein Benutzer die Hand nach innen schieben kann, bis sie an dem Anlageelement anliegt. Das Anlageelement ist in bevorzugter Ausführungsform einstückig mit dem die Innenhülse umgebenden Griffelement ausgebildet.

Bei dem linken Griff ist es besonders bevorzugt, dass auf der inneren Seite des Anlageelements das Fixierelement angeordnet ist. Die innere Seite des Anlageelements ist hierbei die in Richtung des Lenkervorbaus weisende Seite in montiertem Zustand. Beim rechten Griff ist es bevorzugt, dass auf einer inneren Seite des Anlageelements das Aufnahmeelement zur Verbindung mit einer Gaszughalterung oder einem Gaszug angeordnet ist.

Des Weiteren betrifft die Erfindung ein Lenksystem mit einem Lenker für ein motorisch angetriebenes ein- oder mehrspuriges Fahrzeug. Das Lenksystem weist ein Griffpaar auf wie vorstehend beschrieben. Hierbei ist der linke Griff am linken Lenkerende des Lenkers drehfest fixiert. Der rechte Griff ist am rechten Lenkerende angeordnet, wobei dieser ggf. unmittelbar auf einer drehbaren Hülse fixiert ist.

Nachfolgend wird die Erfindung anhand bevorzugter Ausführungsformen unter Bezugnahme auf die anliegenden Zeichnungen näher erläutert.

Es zeigen:
- Fig. 1: eine schematische Draufsicht eines linken Griffs in einer bevorzugten Ausführungsform der Erfindung,
- Fig. 2: den zu dem in Fig. 1 dargestellten linken Griff korrespondierenden rechten Griff,
- Fig. 3: eine Draufsicht in Richtung des Pfeils III in Fig. 1,
- Fig. 4: eine Draufsicht in Richtung des Pfeils IV in Fig. 2,
- Fig. 5: eine Schnittansicht entlang der Linie V - V in Fig. 1,
- Fig. 6: eine Draufsicht einer weiteren bevorzugten Ausführungsform eines linken Griffs,
- Fig. 7: eine Draufsicht einer weiteren bevorzugten Ausführungsform eines linken Griffs,
- Fig. 8: eine Draufsicht in Richtung des Pfeils VIII in Fig. 7,
- Fig. 9: eine Draufsicht einer weiteren bevorzugten Ausführungsform eines linken Griffs, und
- Fig. 10: eine Draufsicht eines zu dem in Fig. 9 dargestellten linken Griff korrespondierenden rechten Griffs.

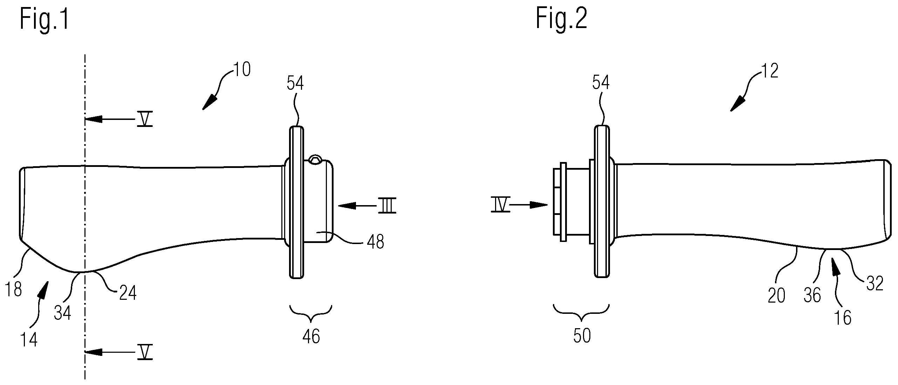

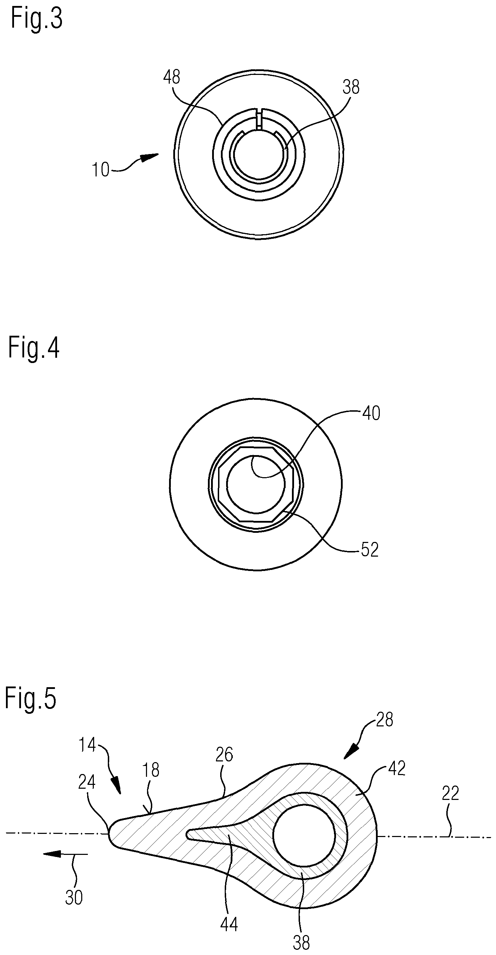

Ein Griffpaar bei einer ersten bevorzugten Ausführungsform (Figuren 1-5) zeigt einen linken Griff 10 sowie einen rechten Griff 12. Der in montiertem Zustand in Fahrtrichtung linke Griff 10 weist eine Handballenauflage 14 und der in montiertem Zustand rechte Griff 12 eine Handballenauflage 16 auf. Die Auflageflächen der Handballenauflagen 14 und 16 unterscheiden sich voneinander. In der dargestellten Draufsicht ist ersichtlich, dass die Auflagefläche 18 des linken Griffs 10 größer ist als die Auflagefläche 20 des rechten Griffs 12. Hierbei ist die Auflagefläche in einer Schnittansicht (Fig. 5) derart definiert, dass es sich um die in eine horizontale Mittenebene 22 projizierte Fläche handelt. Die Fläche ist hierbei einerseits durch eine vom Griff weg in Richtung eines Benutzers weisende Kante bzw. Kontur 24 begrenzt. Andererseits ist die Auflagefläche 18 durch eine Linie 26 begrenzt, die den Übergang zwischen der Handballenauflage 14 und einem zylindrischen Bereich 28 des Griffs begrenzt. Die Linie 26 ist somit derart definiert, dass bei einem zylindrischen Fahrradgriff an dieser Linie die Handballenauflage 14 in die Form eines flügelförmigen in Richtung (Pfeil 30) eines Benutzers weisenden Handballenauflageelements übergeht.

Zusätzlich zu dem Größenunterschied der beiden Auflagenflächen 18, 20 weisen die Kontur 24 des linken Griffs 10 und die Kontur 32 des rechten Griffs 12 eine unterschiedliche Ausgestaltung auf. So ist die Kontur 24 des linken Griffs 10 bauchiger als die Kontur 32 des rechten Griffs 12. Insbesondere weist daher die Kontur 24 insbesondere im Bereich des Scheitelpunkts 34 einen kleineren Krümmungsradius auf als die Kontur 32 im Scheitelpunkt 36.

Die beiden Griffe 10, 12 weisen jeweils eine Innenhülse 38 (Fig. 5) bzw. 40 (Fig. 4) auf. Beide Innenhülsen erstrecken sich über die gesamte Länge der Griffe 10, 12 und weisen eine zylindrische Öffnung auf, deren Durchmesser beim linken Griff dem Lenkerdurchmesser und beim rechten Griff dem Durchmesser einer am Lenker angeordneten drehbaren Hülse des Gasgriffs entspricht. Am rechten Griff kann die Innenhülse 40 ggf. unmittelbar die drehbare Hülse des Gasgriffs verwirklichen.

Wie anhand Fig. 5 ersichtlich ist, sind bei beiden Griffen 10, 12 die Hülsen 38, 40 von einem Griffelement 42 umgeben, wobei das Griffelement 42 aus einem weicheren Material als die Innenhülsen 38, 40 ausgebildet ist.

Die Innenhülse 38 weist ferner einen Versteifungsansatz 44 auf, der mit der Innenhülse 38 einstückig ausgebildet ist und in das Handballenauflageelement 14 ragt, um bei Belastung des Handballenauflageelements 14 ein Abknicken des Handballenauflageelements 14 zu vermeiden. Ein entsprechender Versteifungsansatz kann auch in der Handballenauflage 16 vorgesehen sein, wobei dies nicht unbedingt erforderlich ist, da die Handballenauflage 16 eine geringere Größe aufweist und die Gefahr des Abknickens somit geringer ist.

Zur Fixierung des linken Griffs 10 weist dieser im Bereich einer Innenseite 46 (Fig. 1) ein Fixierelement 48 auf. Das Fixierelement 48 ist im dargestellten Ausführungsbeispiel als geschlitzte Schelle (Fig. 3) ausgebildet. Bevorzugt ist es, dass die Innenhülse 38 in diesem Bereich ebenfalls geschlitzt ist, so dass ein sicheres Klemmen auf der Lenkeroberseite gewährleistet ist. Das Fixieren der Klemme erfolgt durch ein insbesondere als Madenschraube ausgebildetes Klemmmittel, durch das die Schelle 48 zusammengezogen wird.

Der rechte Griff 12 weist im dargestellten Ausführungsbeispiel kein Fixierelement auf, sondern wird beispielsweise reibschlüssig mit der am Lenker zur Betätigung des Gases bzw zur Regelung der Motordrehzahl angeordneten Drehhülse verbunden. Diese Verbindung kann jedoch auch über ein entsprechendes Fixierelement erfolgen.

Auf der Innenseite 50 des rechten Griffs 12 ist in Draufsicht ein mehreckiges, insbesondere achteckiges Aufnahmeelement 52 vorgesehen. Dies dient zur Verbindung mit einer Gaszughalterung, wobei im dargestellten Ausführungsbeispiel auf das Aufnahmeelement 52 ein eine Kulisse ausbildendes Element aufgesteckt werden kann. Durch eine derartige Verbindung ist es möglich, Kulissen mit unterschiedlichen Durchmessern vorzusehen, so dass unterschiedliche Ausgestaltungen von Kurzhubgasgriffen auf einfache Weise realisiert werden können.

Beide Griffe 10, 12 weisen im Bereich der Innenseiten 46, 50 jeweils ein Anlageelement 54 auf. Die Anlageelemente 54 sind insbesondere einstückig mit den Griffelementen 42 ausgebildet. Ferner ist es bevorzugt, dass die Anlageelemente 54 kreisringförmig ausgebildet sind.

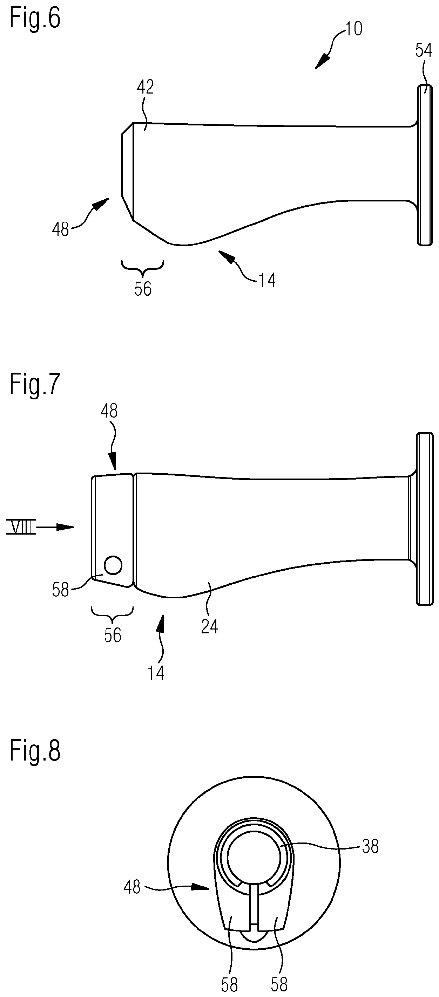

Bei den weiteren, in den Figuren 6-10 dargestellten Ausführungsformen sind identische und ähnliche Bauteile mit denselben Bezugszeichen gekennzeichnet.

Fig. 3 zeigt eine alternative Ausführungsform eines linken Motorradgriffs 10. Dieser weist den wesentlichen Unterschied auf, dass das Fixierelement 48 nicht auf einer Innenseite 46, sondern im Bereich einer Außenseite 56 angeordnet ist. Das Fixierelement 48 kann hierbei wiederum entsprechend einer Schelle ausgebildet sein. In dem in Fig. 6 dargestellten Ausführungsbeispiel ragt das Griffelement 42 über das Fixierelement 48, so dass dieses bedeckt ist. Somit kann ein insbesondere aus hartem Material hergestelltes Fixierelement verwendet werden, das von einem weicheren, als Überzug dienenden Griffelement 42 bedeckt ist.

Bei einer weiteren, in den Figuren 7 und 8 dargestellten Ausführungsform ist das Fixierelement 48 ebenfalls in dem Bereich der Außenseite 56 angeordnet. Das Fixierelement 48 ist wiederum schellenartig ausgebildet und umgibt die insbesondere in diesem Bereich geschlitzte Innenhülse 38. In dem in den Figuren 7 und 8 dargestellten Ausführungsbeispiel ist das Fixierelement nicht vom Griffelement überdeckt. Stattdessen sind die im Wesentlichen radial verlaufenden Ansätze 58, in denen das insbesondere als Schraube ausgebildete Klemmmittel angeordnet ist, derart ausgebildet, dass diese die Kontur 24 der Handballenauflage 14 fortsetzen. Auch die Oberseite des Fixierelements 48 ist derart ausgebildet, dass diese möglichst stufenfrei in die Oberseite des Griffelements 42 übergeht.

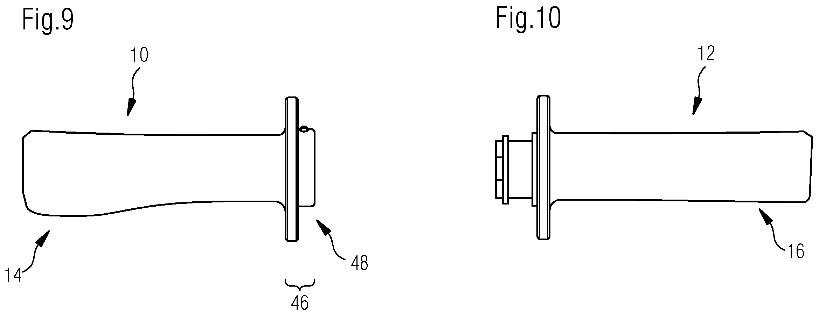

Bei einer weiteren bevorzugten Ausführungsform (Figuren 9 und 10) sind die Handballenauflagen 14 und 16 deutlich kleiner ausgestaltet, wobei weiterhin die Handballenauflage 14 des linken Griffs 10 größer ist als die Handballenauflage 16 des rechten Griffs 12. Bei derartig kleinen Handballenauflagen 14, 16 ist das Vorsehen eines innerhalb der Handballenauflagen 14, 16 angeordneten Versteifungsansatzes 44 (Fig. 5) nicht erforderlich.

Bei dem in Fig. 9 dargestellten linken Griff ist das Fixierelement 48 auf der Innenseite 46 angeordnet. Ebenso kann das Fixierelement 48 auf der Außenseite entsprechend dem in Fig. 6 und 7 dargestellten Ausführungsbeispiel angeordnet sein.

## Patentansprüche

1. Griffpaar für ein motorisch angetriebenes ein- oder mehrspuriges Fahrzeug, mit
einem linken Griff (10), der an einem Lenker drehfest fixierbar ist,
einem rechten Griff (12), der an dem Lenker drehbar anordenbar ist, wobei zumindest der linke Griff (10) ein flügelförmiges Handballenauflageelement (14) aufweist,
wobei die Außenkonturen beider Griffe (10, 12) unterschiedlich sind, **dadurch gekennzeichnet dass** der rechte Griff (12) eine kleinere Außenkontur als der linke Griff (10) aufweist.

2. Griffpaar nach Anspruch 1, **dadurch gekennzeichnet, dass** beide Griffe (10, 12) ein flügelförmiges Handballenauflageelement (14, 16) aufweisen, wobei die beiden Handballenauflageelemente (14, 16) unterschiedliche Auflageflächen (18, 20) aufweisen.

3. Griffpaar nach Anspruch 2, **dadurch gekennzeichnet, dass** die Auflageflächen (18, 20) in Draufsicht unterschiedlich große Flächen aufweisen, wobei die Fläche (18) des linken Griffs (10) vorzugsweise größer ist als die Fläche (20) des rechten Griffs (12).

4. Griffpaar nach einem der Ansprüche 1-3, **dadurch gekennzeichnet, dass** die Handballenauflageelemente (14, 16) in Draufsicht unterschiedliche Konturen (24, 32) aufweisen, wobei die Konturen (24, 32) vorzugsweise unterschiedliche Krümmungsradien aufweisen.

5. Griffpaar nach Anspruch 4, **dadurch gekennzeichnet, dass** die Konturen (24, 32) an Scheitelpunkten (34, 36) unterschiedliche Krümmungsradien aufweisen.

6. Griffpaar nach Anspruch 5, **dadurch gekennzeichnet, dass** der Krümmungsradius am Scheitelpunkt (34) des linken Griffs (10) kleiner ist als der Krümmungsradius am Scheitelpunkt (36) des rechten Griffs (12).

7. Griffpaar nach einem der Ansprüche 1-6, **dadurch gekennzeichnet, dass** beide Griffe (10, 12) eine Innenhülse (38, 40) aufweisen, die von einem Griffelement (42) umgeben ist, wobei die Innenhülse (38, 40) vorzugsweise aus härterem Material als das Griffelement (42) ist.

8. Griffpaar nach Anspruch 7, **dadurch gekennzeichnet, dass** die Innenhülse (38) zumindest des linken Griffs (10), insbesondere beider Griffe (10, 12) einen flügelförmigen Versteifungsansatz (44) aufweist, der in das Handballenauflageelement (14) ragt.

9. Griffpaar nach einem der Ansprüche 1-8, **dadurch gekennzeichnet, dass** der linke Griff ein Fixierelement (48) zum drehfesten Befestigen am Lenker aufweist, wobei das Fixierelement (48) vorzugsweise ein die Innenhülse (38) des Griffs (10) zumindest teilweise umgebendes Klemmelement aufweist.

10. Griffpaar nach Anspruch 9, **dadurch gekennzeichnet, dass** das Fixierelement (48) auf einer Innenseite (46) des linken Griffs (10) angeordnet ist, wobei das Fixierelement (48) vorzugsweise auf einer Außenseite (56) des linken Griffs (10) angeordnet ist und vorzugsweise vom Griffelement (42) zumindest teilweise umgeben ist.

11. Griffpaar nach einem der Ansprüche 1-10, **dadurch gekennzeichnet, dass** der rechte Griff (12) auf seiner Innenseite (50) ein mit der Innenhülse (40) verbundenes, vorzugsweise austauschbares Aufnahmeelement (52) zur Verbindung mit einer Gaszughalterung aufweist.

12. Griffpaar nach einem der Ansprüche 1-11, **dadurch gekennzeichnet, dass** insbesondere beide Griffe (10, 12) an einer Innenseite (48, 50) ein Anlageelement (54) aufweisen, das vorzugsweise teil-ringförmig oder ringförmig ausgebildet ist, wobei das Anlageelement (54) einstückig mit dem Griffelement (42) ausgebildet ist.

13. Griffpaar nach Anspruch 12, **dadurch gekennzeichnet, dass** beim linken Griff (10) auf einer inneren Seite des Anlageelements (54) das Fixierelement (48) angeordnet ist, wobei dass beim rechten Griff (12) auf einer inneren Seite des Anlageelements (54) das Aufnahmeelement (52) zur Verbindung mit der Gaszughalterung angeordnet ist.

14. Lenksystem mit einem Lenker für ein motorisch angetriebenes ein- oder mehrspuriges Fahrzeug mit einem Griffpaar nach einem der Ansprüche 1-13, wobei der linke Griff (10) am linken Lenkerende und der rechte Griff (12) am rechten Lenkerende angeordnet ist.

## Claims

1. Grip pair for a motor-driven single- or multi-track vehicle, comprising
a left grip (10) which can be fixed non-rotatably to a handlebar,
a right grip (12) which can be arranged rotatably on the handlebar,
wherein at least the left grip (10) has a wing-shaped palm rest element (14),
wherein the outer contours of both grips (10, 12) are different,
**characterized in that** the right grip (12) has a smaller outer contour than the left grip (10).

2. Grip pair according to claim **1, characterized in that** both grips (10, 12) have a wing-shaped palm rest element (14, 16), wherein both palm rest elements (14, 16) have different rest surfaces (18, 20).

3. Grip pair according to claim 2, **characterized in that** the rest surfaces (18, 20) are of different sizes in plan view, wherein the surface (18) of the left grip (10) is preferably larger than the surface (20) of the right grip (12).

4. Grip pair according to any one of claims 1-3, **characterized in that** the palm rest elements (14, 16) have different contours (24, 32) in plan view, wherein the contours (24, 32) preferably have different radii of curvature.

5. Grip pair according to claim 4, **characterized in that** the contours (24, 32) have different radii of curvature at respective vertices (34, 36).

6. Grip pair according to claim 5, **characterized in that** the radius of curvature at the vertex (34) of the left grip (10) is smaller than the radius of curvature at the vertex (36) of the right grip (12).

7. Grip pair according to any one of claims 1-6, **characterized in that** both grips (10, 12) have an inner sleeve (38, 40) which is surrounded by a grip element (42), wherein the inner sleeve (38, 40) is preferably made of a harder material than the grip element (42).

8. Grip pair according to claim 7, **characterized in that** the inner sleeve (38) of at least the left grip (10), in particular of both grips (10, 12), has a wing-shaped stiffening projection (44) which projects into the palm rest element (14).

9. Grip pair according to any one of claims 1-8, **characterized in that** the left grip has a fixing element (48) for non-rotatable fastening to the handlebar, wherein the fixing element (48) preferably has a clamping element which at least partially surrounds the inner sleeve (38) of the grip (10).

10. Grip pair according to claim 9, **characterized in that** the fixing element (48) is arranged on an inner side (46) of the left grip (10), wherein the fixing element (48) is preferably arranged on an outer side (56) of the left grip (10) and is preferably at least partially surrounded by the grip element (42).

11. Grip pair according to any one of claims 1-10, **characterized in that** the right grip (12) has, on its inner side (50), a preferably replaceable receiving element (52) connected to the inner sleeve (40) for connection to a throttle cable holder.

12. Grip pair according to any one of claims 1-11, **characterized in that** in particular both grips (10, 12) have an abutment element (54) on an inner side (48, 50), which is preferably partially annular or annular in shape, wherein the abutment element (54) is formed integrally with the grip element (42).

13. Grip pair according to claim 12, **characterized in that**, in the case of the left grip (10), the fixing element (48) is arranged on an inner side of the abutment element (54), wherein, in the case of the right grip (12), the receiving element (52) is arranged on an inner side of the abutment element (54) for connection to the throttle cable holder.

14. Steering system comprising a handlebar for a motor-driven single- or multi-track vehicle and a grip pair according to any one of claims 1-13, wherein the left grip (10) is arranged at the left end of the handlebar and the right grip (12) is arranged at the right end of the handlebar.

## Revendications

1. Paire de poignées pour un véhicule à une ou à plusieurs voies, entraîné par moteur, avec
une poignée gauche (10) qui peut être fixée de façon non tournante à un guidon, une poignée (12) qui peut être disposée de façon tournante au guidon,
au moins la poignée gauche (10) comprenant un élément d'appui de paume de main (14) en forme d'aile,
les contours extérieurs des deux poignées (10, 12) étant différents,
**caractérisée en ce que** la poignée droite (12) a des contours extérieurs plus petits que la poignée droite (10).

2. Paire de poignées selon la revendication 1, **caractérisée en ce que** les deux poignées (10, 12) comprennent un élément d'appui de paume de main (14, 16) en forme d'aile, les deux éléments d'appui de paume de main (14, 16) comprenant des surfaces d'appui différentes (18, 20).

3. Paire de poignées selon la revendication 2, **caractérisée en ce que** les surfaces d'appui (18, 20) comprennent, vu d'en haut, des surfaces de tailles différentes, la surface (18) de la poignée gauche (10) étant de préférence plus grande que la surface (20) de la poignée droite (12).

4. Paire de poignées selon l'une des revendications 1 à 3, **caractérisée en ce que** les éléments d'appui de paume de main (14, 16) comprennent, vu d'en haut, des contours différents (24, 32), les contours (24, 32) comprenant de préférence des rayons de courbure différents.

5. Paire de poignées selon la revendication 4, **caractérisée en ce que**, à des sommets (34, 36), les contours (24, 32) ont des rayons de courbure différents.

6. Paire de poignées selon la revendication 5, **caractérisée en ce que**, au sommet (36), le rayon de courbure de la poignée gauche (10) est plus petit que le rayon de courbure de la poignée droite (12) au sommet (36).

7. Paire de poignées selon l'une des revendications 1 à 6, **caractérisée en ce que** les deux poignées (10, 12) comprennent une douille intérieure (38, 40) qui est entourée par un élément de poignée (42), la douille intérieure (38, 40) étant de préférence en un matériau plus dur que l'élément de poignée (42).

8. Paire de poignées selon la revendication 7, **caractérisée en ce que** la douille intérieure (38), du moins de la poignée gauche (10), en particulier des deux poignées (10, 12), comprend une saillie de renforcement (44) en forme d'aile qui s'étend dans l'élément d'appui de paume de main (14).

9. Paire de poignées selon l'une des revendications 1 à 8, **caractérisée en ce que** la poignée gauche comprend un élément de fixation (48) pour une fixation non tournante au guidon, l'élément de fixation (48) comprenant de préférence un élément de serrage entourant du moins en partie la douille intérieure (38) de la poignée (10).

10. Paire de poignées selon la revendication 9, **caractérisée en ce que** l'élément de fixation (48) est disposé sur une face intérieure (46) de la poignée gauche (10), l'élément de fixation (48) étant de préférence disposé sur une face extérieure (56) de la poignée gauche (10) et étant de préférence entouré par l'élément de poignée (42), du moins en partie.

11. Paire de poignées selon l'une des revendications 1 à 10, **caractérisée en ce que** la poignée droite (12) comprend sur sa face intérieure (50) un élément de réception (52), de préférence échangeable et relié à la douille intérieure (40), destiné à être relié à une fixation du câble d'accélérateur.

12. Paire de poignées selon l'une des revendications 1 à 11, **caractérisée en ce que** notamment les deux poignées (10, 12) comprennent sur une face intérieure (48, 50) un élément d'arrêt de main (54) qui est formé de préférence partiellement en forme d'anneau ou en forme d'anneau, l'élément d'arrêt de main (54) étant formé d'une pièce avec l'élément de poignée (42).

13. Paire de poignées selon la revendication 12, **caractérisée en ce que**, à la poignée gauche (10), sur une face intérieure de l'élément d'arrêt de main (54), l'élément de fixation (48) est disposé, et à la poignée droite (12), sur une face intérieure de l'élément d'arrêt de main (54), l'élément de réception (52) pour la liaison à la fixation du câble accélérateur est disposé.

14. Système de guidage avec un guidon pour un véhicule à une ou à plusieurs voies, entraîné par moteur, comprenant une paire de poignées selon une des revendications 1 à 13, la poignée gauche (10) étant disposée à l'extrémité gauche de guidon et la poignée droite (12) étant disposée à l'extrémité droite de guidon.
